# EUROPÄISCHE PATENTSCHRIFT

(11) **EP 1 815 172 B1**
(45) Veröffentlichungstag und Bekanntmachung des Hinweises auf die Patenterteilung: **14.01.2009**
(21) Anmeldenummer: 05803004.0
(22) Anmeldetag: 10.11.2005
(51) Int. Cl.: F16K 15/14

(54) **VERSCHLUSSVORRICHTUNG MIT DRUCKVENTIL**
CLOSURE DEVICE WITH A PRESSURE VALVE
DISPOSITIF DE FERMETURE MUNI D'UN CLAPET DE REFOULEMENT

(30) Priorität: 24.11.2004 FR 0452739
(43) Veröffentlichungstag der Anmeldung: 08.08.2007
(73) Patentinhaber: MANN + HUMMEL GMBH, D-71638 Ludwigsburg (DE)
(72) Erfinder: TROTIN, Philippe, F-53360 Quelaines (FR); CHAMPION, Arnaud, F-53000 Laval (FR)
(86) Internationale Anmeldenummer: PCT/EP2005/055887
(87) Internationale Veröffentlichungsnummer: WO 2006/056537

(56) Entgegenhaltungen:
- FR-A- 2 674 376
- GB-A- 1 538 766
- US-A- 5 275 337
- US-A- 5 762 103

## Beschreibung

Die vorliegende Erfindung betrifft eine Verschlussvorrichtung mit einem Druckventil wie sie beispielswiese aus FR-A-2674376 bekannt ist.

Eine derartige Vorrichtung dient vor allem dazu, ein Element eines Automobils zu verschließen, das sich unter der Motorhaube befindet, wie z. B. der Verschluss einer Kühlflüssigkeit, ein Ölverschluss (der Zylinderkopfabdeckung zum Beispiel), Verschluss des Bremsflüssigkeitsbehälters oder ein Fehlzündungsventil auf dem Verteiler.

Aus offensichtlichen Sicherheitsgründen müssen verschiedene Elemente von Automobilen mit einer Verschlussvorrichtung mit Druckventil ausgestattet sein.

Derartige Vorrichtungen müssen verschiedensten Anforderungen genügen, vor allem dürfen sie keine Verfallserscheinungen aufweisen und unterschiedlichsten Belastungen widerstehen, die unter einer Motorhaube existieren (Temperatur, Hygrometrie, Wärmeschocks, chemische Aggressionen, ...).

Die in diesem Bereich verwendeten klassischen Druckventile haben den Nachteil, aus mehreren Teilen zu bestehen (eine Stellfeder, ein Klappenventil und eine Dichtung), d.h. sie sind relativ teuer und außerdem schwierig zusammenzubauen und einzubauen.

Ziel der vorliegenden Erfindung ist es, diese Nachteile zu beheben, indem eine einfachere und dementsprechend billigere Verschlussvorrichtung mit einem Druckventil vorgeschlagen wird, deren Einbau ohne Werkzeuge vorgenommen werden kann und die außerdem in einem Temperaturbereich zwischen -30 und +150°C funktionieren kann.

Gemäß der Erfindung ist eine derartige Verschlussvorrichtung durch die im Anspruch definierten Merkmale gekennzeichnet.

Eine derartige Klammer kann zum Beispiel aus Metall oder aus einem synthetischen Stoff hergestellt sein.

Gemäß der Erfindung ist mindestens einer der Arme dieser Klammer mit einer ausgegossenen oder darauf aufgesetzten Dichtung ausgestattet.

Diese Dichtung verschließt die Ausströmöffnung für die Flüssigkeit, um die Dichtheit zu gewährleisten, wenn der Druckunterschied zwischen dem Innenteil des zu verschließenden Elementes und der äußeren Umgebung niedriger als ein erster vorbestimmter Wert oder als der Dichtungsdruck ist, und sie öffnet diese Öffnung, wenn dieser Druckunterschied größer als ein zweiter vorbestimmter Wert oder als der Auslösedruck ist, und formt so das Druckventil.

Dabei ist zu beachten, dass bei einem Druckunterschied, der niedriger als der Dichtungsdruck ist, die Dichtung nicht nur die Dichtheit zwischen dem Innenteil des zu verschließenden Elementes und der äußeren Umgebung gewährleisten muss, sondern ebenfalls und umgekehrt gegenüber der Flüssigkeit, die von der äußeren Umgebung kommen kann (Druckwasser, Öl, ...).

Gemäß einem bevorzugten Merkmal der Erfindung ist die Nut mit zwei Ausströmöffnungen für eine Flüssigkeit versehen, die sich gegenüberliegen und jeweils an eine Dichtung angeschlossen sind.

Gemäß dieser Konfiguration spreizen sich die beiden seitlichen Arme der elastisch deformierbaren Klammer als Reaktion auf einen Druckunterschied, der höher als der Auslösedruck ist.

Dabei ist zu beachten, dass die Nut erfindungsgemäß mit einem Vorsprung versehen ist, welcher als Anschlag für den mittleren Arm der elastisch deformierbaren Klammer dient, um so ihre zwangsweise Einführung in die Nut zu erleichtern.

Gemäß eines anderen Merkmals der Erfindung beträgt der Dichtungsdruck 150 mb.

Gemäß eines anderen Merkmals der Erfindung beträgt der Auslösedruck 300 mb.

Um die Sicherheit zu gewährleisten, ist es vorteilhaft, dass die Ausströmöffnung für die Flüssigkeit so dimensioniert ist, dass 50 Liter Flüssigkeit pro Minute auslaufen können, wenn sie geöffnet ist.

Die Merkmale der Verschlussvorrichtung der vorliegenden Erfindung werden detaillierter beschrieben, indem auf die beiliegenden nicht einschränkenden Zeichnungen Bezug genommen wird, in denen:
- die Abbildung 1 eine perspektivische Ansicht der Verschlussvorrichtung darstellt, in der das Druckventil geschlossen ist;
- die Abbildung 2 eine der Abbildung 1 ähnliche perspektivische Ansicht darstellt, in der das Druckventil allerdings geöffnet ist.

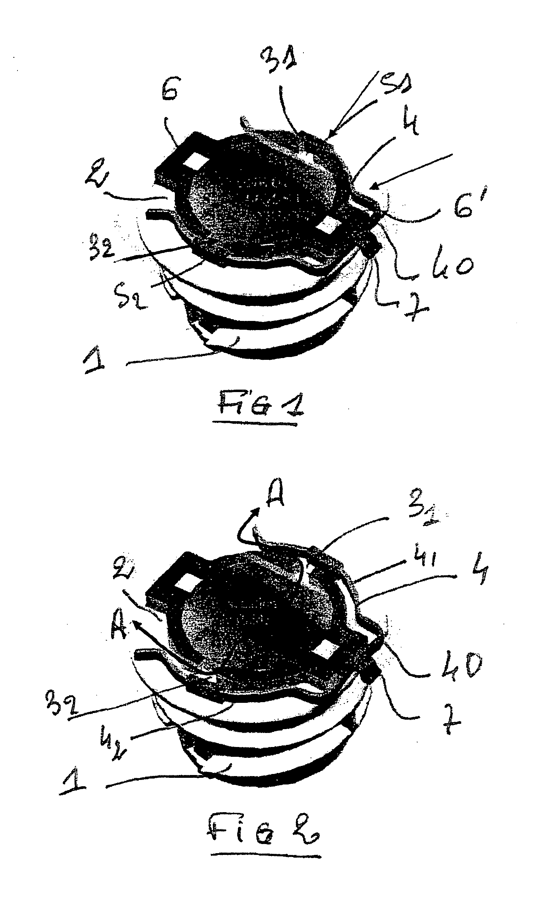

Gemäß den Abbildungen 1 und 2 wird die Verschlussvorrichtung in Form einer Schutzkappe 1 ausgeführt, die in dem dargestellten Beispiel mit einem äußeren Gewinde versehen ist, das dazu dient, mit einem dem zu verschließenden Element entsprechenden Innengewinde zusammenzuarbeiten, das nicht in den Zeichnungen dargestellt ist.

Diese Schutzkappe 1 ist an ihrem äußeren Umfang mit einer im Wesentlichen ringförmigen Nut 2 versehen, in die zwei sich gegenüberliegende Ausströmöffnungen 3₁, 3₂ für eine Flüssigkeit gebohrt sind und die eine Verbindung zwischen dem Innenteil des zu verschließenden Elementes und der äußeren Umgebung herstellen.

Das Druckventil wird durch eine elastisch deformierbare und im Wesentlichen U-förmige Klammer 4 geformt, die einen mittleren Arm 40 sowie zwei seitliche Arme 4₁, 4₂ beinhaltet.

Gemäß den Abbildungen 1 und 2 haben die Arme 4₁, 4₂ der elastisch deformierbaren Klammer 4 eine Geometrie, welche derjenigen der Nut 2 entspricht, und sie sind zwangsweise in diese Klammer auf jeder Seite der Schutzkappe 1 eingepasst, so dass sie diese wie ein Sandwich umschließen.

Gemäß der in den Abbildungen dargestellten Konfiguration beinhaltet die Nut 2 zwei Vorsprünge 6, 6', von denen einer als Anschlag für den mittleren Arm 40 der elastisch deformierbaren Klammer 4 dient.

Ein Haken 7 erleichtert den Einbau dieser Klammer.

Gemäß den Abbildungen 1 und 2 ist jeder der seitlichen Arme 4₁, 4₂ der elastisch deformierbaren Klammer außerdem mit einer ausgegossenen oder darauf aufgesetzten Dichtung 5₁, 5₂ ausgestattet.

Jede dieser Dichtungen 5₁, 5₂ ist mit einer der beiden sich gegenüberliegenden Ausströmöffnungen für Flüssigkeiten 3₁, 3₂ verbunden.

Gemäß Abbildung 1, wenn der Druckunterschied zwischen dem Innenteil des zu verschließenden Elementes und der äußeren Umgebung niedriger als ein erster vorbestimmter Wert ist, oder wenn der Dichtungsdruck vorzugsweise bei 150 mb liegt, verschließen die Dichtungen 5₁, 5₂ jeweils die damit verbundenen Ausströmöffnungen für Flüssigkeiten 3₁, 3₂, um so die Dichtheit zu garantieren.

Gemäße Abbildung 2, wenn der Druckunterschied zwischen dem Innenteil des zu verschließenden Elementes und der äußeren Umgebung höher als ein zweiter vorbestimmter Wert ist, oder wenn der Dichtungsdruck vorzugsweise bei 300 mb liegt, spreizen sich die beiden seitlichen Arme 4₁, 4₂ der elastisch deformierbaren Klammer 4, um gemäß den Pfeilen A den Abfluss einer Flüssigkeitsmenge von vorzugsweise 150 Liter pro Minute zu gewährleisten und so die Sicherheit zu garantieren.

## Patentansprüche

1. Verschlussvorrichtung mit einem Druckventil, vor allem dazu bestimmt, ein Element eines Automobils zu verschließen, das sich unter der Motorhaube befindet, wie z. B. der Verschluss einer Kühlflüssigkeit, ein Ölverschluss oder der Verschluss des Bremsflüssigkeitsbehälters, die in Form einer Schutzkappe (1) ausgeführt ist, auf deren äußeren Umfang sich eine im Wesentlichen ringförmige Nut (2) befindet, in welche einerseits mindestens eine Ausströmöffnung (3₁,3₂) für eine Flüssigkeit gebohrt ist, die mit dem Innenteil des zu verschließenden Elementes kommuniziert, und wobei andererseits die beiden seitlichen Arme (4₁,4₂) einer im Wesentlichen U-förmigen, elastisch deformierbaren Klammer (4) zwangsweise an jeder Seite der Schutzkappe (1) eingeführt sind, und wobei mindestens einer dieser Arme (4₁,4₂) mit einer ausgegossenen oder auf den Arm aufgesetzten Dichtung (5₁,5₂) versehen ist, welche die Ausströmöffnung für eine Flüssigkeit (3₁,3₂) verschließt, um die Dichtheit zu gewährleisten, wenn der Druckunterschied zwischen dem Innenteil des zu verschließenden Elementes und der äußeren Umgebung niedriger als ein erster vorbestimmter Wert oder als der Dichtungsdruck ist und welche diese Öffnung öffnet, wenn der Druckunterschied größer als ein zweiter vorbestimmter Wert oder als der Dichtungsdruck ist und so das Druckventil formt, wobei die Nut (2) mit zwei Ausströmöffnungen (3₁,3₂) versehen ist, die sich im Wesentlichen gegenüberliegen und jeweils mit einer Dichtung (5₁,5₂) versehen sind und wobei die Nut (2) mit einem Vorsprung (6) versehen ist, der einen Anschlag für den mittleren Arm (40) der elastisch deformierbaren Klammer (4) bildet.

## Claims

1. Closing device with a pressure valve, mainly destined to close an element of an automobile which is located under the engine hood such as, for example, the closure of a cooling liquid, an oil closure or the closure of the brake-fluid reservoir, the closure being designed in the shape of a protecting cap (1), the outer circumference of which has a basically ring-shaped groove (2) into which, on the one hand, at least one outflow opening (3₁,3₂) for a liquid is bored which communicates with the inner part of the element to be closed and, on the other hand, the two lateral arms (4₁,4₂) of a basically U-shaped, elastically deformable clamp (4) being introduced by force on either side of the protecting cap (1), and at least one of these arms (4₁, 4₂) being provided with a sealing (5₁,5₂) that is molded or placed onto the arm; the sealing (5₁,5₂) closes the outflow opening for a liquid (3₁, 3₂) to ensure the tightness if the pressure difference between the inner part of the element to be closed and the outer environment is lower than a first pre-determined value or lower than the sealing pressure and it opens this opening if the pressure difference is larger than a second pre-determined value or larger than the sealing pressure, thus shaping the pressure valve, the groove (2) being provided with two outflow openings (3₁, 3₂) which are basically facing each other and are provided with one sealing (5₁, 5₂) each and the groove (2) being provided with a protrusion (6) which forms a stop for the center arm (40) of the elastically deformable clamp (4).

## Revendications

1. Dispositif d'obturation avec une vanne de pression, essentiellement destinée à fermer un élément d'une automobile qui se trouve sous le capot moteur, comme par ex. le bouchon d'un liquide de refroidissement, un bouchon d'huile ou le bouchon du réservoir de liquide de frein, qui est réalisé sous la forme d'un capuchon protecteur (1) sur la circonférence duquel se trouve une rainure (2) pour l'essentiel annulaire, dans laquelle d'une part est percée au moins une ouverture d'écoulement (3₁,3₂) pour un liquide qui communique avec la partie intérieure de l'élément à fermer, et d'autre part les deux bras latéraux (4₁,4₂) d'une pince (4) essentiellement en forme de U et déformable élastiquement étant introduits en force de chaque côté du capuchon protecteur (1), et au moins l'un de ces bras (4₁,4₂) étant muni d'un joint (5₁,5₂) moulé ou rapporté sur le bras qui ferme l'ouverture d'écoulement pour un liquide (3₁,3₂) afin de garantir l'étanchéité quand la différence de pression entre la partie intérieure de l'élément à fermer et l'environnement extérieur est inférieure à une première valeur prédéterminée ou à la pression d'étanchéité et qui ouvre cette ouverture quand la différence de pression est supérieure à une deuxième valeur prédéterminée ou à la pression d'étanchéité et qui forme ainsi la vanne de pression, la rainure (2) étant munie de deux ouvertures d'écoulement (3₁,3₂) qui se trouvent pour l'essentiel en vis-à-vis et sont munies chacune d'un joint (5₁,5₂), et la rainure (2) étant munie d'une saillie (6) qui forme une butée pour le bras médian (40) de la pince (4) déformable élastiquement.
